**Europäisches Patentamt**

**European Patent Office**

**Office européen des brevets**

(11) Publication number : **0 412 735 B1**

# EUROPEAN PATENT SPECIFICATION

(45) Date of publication of patent specification :
02.03.94 Bulletin 94/09

(21) Application number : **90308568.6**

(22) Date of filing : **03.08.90**

(51) Int. Cl.⁵ : **B23K 11/06**

(54) Welded can body.

(30) Priority : **09.08.89 JP 206315/89**

(43) Date of publication of application :
**13.02.91 Bulletin 91/07**

(45) Publication of the grant of the patent :
**02.03.94 Bulletin 94/09**

(84) Designated Contracting States :
**DE FR GB**

(56) References cited :
**EP-A- 0 140 775**
**GB-A- 2 071 549**
**US-A- 4 652 715**

(73) Proprietor : **TOYO SEIKAN KAISHA LIMITED**
**3-1, Uchisaiwai-cho 1-chome Chiyoda-ku**
**Tokyo (JP)**

(72) Inventor : **Mino, Toshio**
**2069-1 Kamigouchou, Sakae-ku**
**Yokohama City, Kanagawa (JP)**
Inventor : **Hotta, Hisashi**
**318-104 Hazawachou, Kanagawa-ku**
**Yokohama City, Kanagawa (JP)**
Inventor : **Kitamura, Yoichi**
**234-26 Hazawachou, Kanagawa-ku**
**Yokohama City, Kanagawa (JP)**
Inventor : **Akae, Yoshiteru**
**5-2-816 Kojima 1-chome, Taitou-ku**
**Tokyo (JP)**
Inventor : **Nishida, Shuuzou**
**25-28 Arima 8-chome Miyamae-ku**
**Kawasaki City, Kanagawa (JP)**
Inventor : **Togo, Yoshiro**
**434 Kamisugetachou, Hodogaya-ku**
**Yokohama City, Kanagawa (JP)**

(74) Representative : **Charlton, Peter John et al**
**Elkington and Fife Prospect House 8**
**Pembroke Road**
**Sevenoaks, Kent TN13 1XR (GB)**

## Description

The present invention relates to a tinfree steel welded can body to be used for cans such as beer cans, carbonated drink cans, coffee drink cans, juice cans and general foods cans and so on.

Many millions of welded can bodies formed by mash-seam electric resistance welding the lapped portion of a tinplate can body preform with copper wire electrodes interposed between a pair of electrode rolls, are manufactured each year.

A tinfree steel welded can body is more desirable, since tinfree steel, that is, a surface treated steel sheet covered on both sides with a surface chrome layer essentially consisting of a metallic chrome layer and a chrome hydrated oxide layer thereon, is more inexpensive than tinplate, and superior to tinplate in can body performances such as lacquer adhesion. Tinfree steel welded can bodies, however, have not yet been manufactured so much as tinplate welded can bodies.

The main reason is the difficulty of electric resistance welding a conventional tinfree steel due to the relatively high electric insulation of the chrome hydrated oxide layer and the relatively high melting point of the metallic chrome layer.

Document US-A-4 652 715 discloses a welded can body formed by mash-seam electric resistance welding a lapped portion, which has been formed by overlapping opposite margina postions of a blank of a tinfree steel, wherein the tinfree steel comprises a metallic chrome layer of 100 mg/m2 and a chrome hydrated oxide layer of 16 mg/m2 in terms of metallic chrome.

There has been proposed a method of making a tinfree steel can body by welding after having removed the surface chrome layer on the marginal portion to be the lapped portion. The welded tinfree steel can body thus made is not acceptable commercially, since its manufacuring cost is relatively high, and the properties of the weld portion such as corrosion resitance and the adhesion of a mending lacquer film are poor.

In Japanese Patent Publication No. 1982-19752 is proposed an art for making a tinfree steel welded can body without removing the surface chrome layer, wherein is used a tinfree steel having a porous metallic chrome layer of 3 to 40 mg/m$^2$ (the amount on one side; all same hereinafter) and a chrome hydrated oxide layer of 2 to 15 mg/m$^2$.

In the method, it is said that the solid phase diffusion of iron, that is, welding, is facilitated by allowing the metallic chrome layer which has a high melting point of approximately 1900°C leading to the difficulty of the solid phase diffusion of iron, to be as thin as possible and porous so as to enlarge exposed iron areas.

The inventors, however, have found that while the tinfree steel of the above type has good weldability at a state as received, without being coated with a laquer and baked usually at about 200°C for 20 minutes, its weldability is poor after it is baked. It is thought that the evaluation of the weldability in the example of the above Publication was conducted for the tinfree steel as received, since there is no description that a laquer was coated and baked before welding.

During baking, which is usually conducted in an oven, in case of the tinfree steel of the above type, oxygen in the air oxidizes tiny iron surfaces exposing from the porous surface chrome layer, and allows iron oxide layers of relatively high electric resistance to develop. It is assumed that the iron oxide layer has a higher specific electric resistance than the chrome hydrated oxide layer, since it is not a hydrate.

Accordingly, the tinfree steel as baked of the above type is apt to generate local overheated portions and thus splashes along the weld portion during a welding operation. The splashes, especially large,needle-like ones,tend to render the mending of the weld portion with a laquer difficult.

When the welding current is reduced to prevent the splashes from generating, the solid phase diffusion of iron will not develope sufficiently, thus leading to a low welding strength. As a result,there will be no available current range (ACR) for forming a weld portion having commercially satisfactory properties.

Furthermore, the tinfree steel of the above type has a drawback that its corrosion resitance is poor, since the metallic chrome layer thereof is porous.

To improve the prior art discussed above,this invention seeks to provide a tinfree steel welded can body formed by mash-seam electric resistance welding and coated with a baked laquer film, which has an improved corrosion resistance in overall,and is provided with a weld portion mendable readily with a mending laquer, and having a commercially satisfactory welding strength.

According to the invention there is provided a mash-seam electric resistance welded can body consisting of tinfree steel formed before welding with a baked lacquer film (17, 18) thereon, the tinfree steel comprising a metallic chromium layer and a chromium hydrated oxide layer, wherein

the metallic chromium layer is between 40 mg/m$^2$ and 130 mg/m$^2$, the chromium hydrated oxide layer is between 3 mg/m$^2$ and 20 mg/m$^2$ in terms of metallic chromium, an exposed iron area of the metallic chromium layer is 15 mA/cm$^2$ or less in terms of passivation current, and a ratio of the number of sulfur atoms to the number of chromium atoms in the chromium hydrated oxide layer is 0.05 or less.

Here S and Cr indicate relative numbers of S atoms and Cr atoms contained in the chrome hydrated oxide layer, respectively, and thus S/Cr is equal to the ratio of the number of sulfur atoms to the number of chrome atoms present in the chrome hydrated oxide layer.

It is more preferable that S/Cr may be 0.03 or less, and the chrome hydrated oxide layer may be 3 to 15 mg/m². The passivation current which measuring method will be described hereinafter, preferably may be 10 mA/cm2 or less. The metallic chrome layer preferably may be smooth and have a substantially uniform thickness.

Since the passivation current for the tinfree steel is 15 mA/cm² or less, and more preferably 10 mA/cm2 or less, and thus the metallic chrome layer has substantially no exposed iron area, iron oxide layers having relatively high electric resistance will be hardly formed during heating the tinfree steel in an oven, e.g. at 200°C for 20 minutes for curing a coated lacquer film.

Since S/Cr in the chrome hydrated oxide layer is 0.05 or less, and more preferably 0.03 or less, the amount of sulfur contained in the chrome hydrated oxide layer is extremely little. It is presumed that the sulfur is present in a form of sulfate radical, that is, $SO_4^{2-}$ replacing part of OH radical in the chrome hydrated oxide layer.

Since the ion radius of $SO_4^{2-}$ is 2.36 Å and much larger than that of $OH^{1-}$ which is 1.40 Å ,the chrome hydrated oxide layer having a larger S/Cr is thicker in case of the same chrome amount, and the portion of a $Cr-SO_4$ bonding presumably has a larger specific electric resistance than that of a Cr-OH bonding, even the chrome hydrated oxide layer of 20 mg/m² which is thickest according to in the invention is thought to have a relatively low electric insulation.

Accordingly, the above-described tinfree steel will hardly generate splashes owing to relatively low heat generation during welding under the welding current which is large enough to obtain a satisfactory welding strength, even when the surface chrome layer is remained on the marginal portions to be welded.

A conventional tinfree steel is made in a chromic acid bath containing $H_2SO_4$ added as a catalystic agent, and S/Cr in the chrome hydrated oxide layer thereof is about 0.15 or more.

However, the tinfree steel in which S/Cr is 0.05 or less is made in a chromic acid electrolytic bath containing a fluoride as a catalystic agent and substantially no sulfate, and thus the chrome hydrated oxide layer thereof contains some amount of fluorine ion to a degree of about 0.2 to 0.4 as F/Cr. However, since the ion radius of $F^{1-}$ is 1.36 Å and almost same as that of $OH^{1-}$, it is thought that the presence of $F^{1-}$ ion will hardly affect the thickness of the chrome hydrated oxide layer.

In case where the metallic chrome layer is 130 mg/m² or less, it is very thin and brittle, and thus apt to create cracks together with the chrome hydrated oxide layer thereon due to a welding force applied by welding rolls during welding.

The iron surfaces peeping out from the cracks at the opposite marginal portions of the lapped portion tend to be brought into contact with each other. The iron surfaces in contact with each other will be jointed integrally, that is, welded by solid diffusion with a temperature raise under pressure, and simultaneously the metallic chrome which is extremely thin will diffuse into the iron rapidly. Accordingly, welding at relatively low welding current levels and in a relatively wide available current range (ACR) will be possible.

It is not preferable that the metallic chrome layer is less than 40 mg/m², since the area of the exposed iron portions will be increased, and thus the corrosion resistance of the welded can body will be poor. Also it is not preferable that the chrome hydrated oxide layer is less than 3 mg/m², since it will cause a poor lacquer adhesion on the welded portion.

It is not desirable that the metallic chrome layer is more than 130 mg/m², as well as the chrome hydrated oxide layer is more than 20 mg/m², since they both will cause remarkable splashes and reduce the welding strength.

Reference is made to the drawings, in which:

Fig. 1 is a fragmentary longitudinal sectional view explanatory of an example of a state just prior to welding the welded can body according to the present invention;

Fig. 2 is a metallograghic picture of the section of an example of the weld portion of the welded can body according to the present invention taken perpendicularly thereto;

Fig. 3 is a metallograghic picture of the section of the weld portion shown in Fig. 2 taken in pararell therewith along the line III-III of Fig. 2;

Fig. 4 is an example of an anodic voltage-anodic current diagram for determining the passivation current.

Tinfree steel is made by electrolytically chromic acid treating a very low carbon steel strip. So as to form the metallic chrome layer which is as thin as 40 to 130 mg/m² and substantially has no exposed iron portions with the passivation current of 15 mA/cm² or less, it is important that the surface of the steel strip just prior to the chromic acid treating is clean substantially fully, that is, substantially free of foreign materials such as oily films and iron oxide films or the like.

Accordingly, it is desirable to allow the temperature of the strip exiting out of an annealing furnace, pre-

3

ferably a continuous annealing furnace, to be as low as possible, preferably lower than 100°C, so as to prevent the iron oxide films from developing during storage in a coil form after the annealing; to prevent fully the oily films from adhering to the surface of the strip during skinpass rolling; to allow the period from the skinpass rolling to the electrolytic chromic acid treating to be as short as possible, preferably within five days, so as to prevent rusting and oxide films from developing in the period. and to conduct more fully electrolytic degreasing and electrolytic pickling in an electrolytically chromic acid treating line; or the like.

So as to made a tinfree steel having the chrome hydrated oxide layer in which S/Cr is 0.05 or less, and preferably 0.03 or less, it is desirable that the electrolytic chromic acid bath in the electrolytically chromic acid treating line is a dilute chromic acid one which contains a fluoride such as NaF and $NH_4F$ as a catalytic agent and substantially no sulfate. It is, further, desirable that the water rinsing just after the electrolytically chromic acid treating is performed fully using a hot rinsing water, e.g. of higher than approximately 70°C, so as to reduce to a minimum the sulfate ions remaining in the chrome hydrated oxide layer based on the sulfate contained as an impurity in the chromic acid which is the main ingredient of the chromic acid bath.

The tinfree steel made in the manner as aforementioned and of a commercial size, e.g. of about 1 mm × 1 mm is coated with an inner lacquer and an outer lacquer (including a printing ink) except the portions corresponding to the opposite marginal portions to be the weld portion and the vicinity thereof, and preferably the portions corresponding to flange portions perpendicular to the former portions, and then baked for curing the lacquers at about 200°C for about 20 minutes. Thereafter, the tinfree steel is cut into blanks of a given size.

The blank is fed to a mash-seam electric resistance welding machine preferably of the Soudronic type provided with copper wire electrodes interposed between an outer electrode roll and an inner electrode roll, is allowed the marginal portions to be overlapped to form a can body preform having a lapped potion, and then made into a welded can body by mash-seam welding the lapped portion.

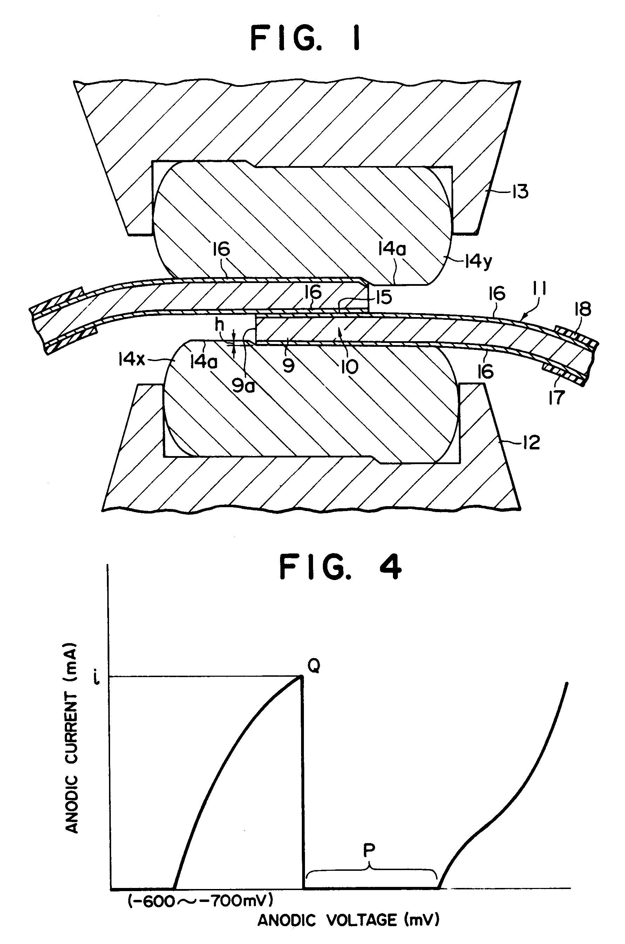

A conventional copper wire electrode having opposite flat welding surfaces may be employed. It is preferable, however, to use wire electrodes 14x, 14y having a marginal projection 14a on the welding surface to be brought into contact with the lapped portion 10, which electrode is described in U.S. Patent Specification No. 4,652,715 and indicated in Fig. 1, wherein numeral references 11, 12, 13, 15, 16, 17 and 18 illustrate the can body preform, the inner electrode roll, the outer electrode roll, the contact surface of the lapped portion, the surface chrome layer, the inner lacquer film and the outer lacquer film, respectively.

The marginal projection 14a has advantages that it allows welding in a wide available current range (ACR) presumably by facilitating current flow through the cut edges 9a of the marginal portions where the steel substrate is exposed, and improves the mendability of the weld portion with a mending laquer due to the gently inclined step portion thereof.

The marginal projection 14a may be provided on only either of the inner wire electrode 14x and the outer wire electrode 14y, preferably on only the former.

It is possible with the wire electrode having the marginal projection 14a to weld the tinfree steel satisfactorily without creating pittings or the like at a smaller welding current than in case of tinplate under a considerably wide available current range (ACR), even in case where the wire electrode is bare without being coated with tin or the like, and the welding force is about 40 to 50 daN(Kgf), that is, almost same as that for tinplate.

The tinfree steel of 0.22 mm thick and temper degree $T_4$ which has the metallic chrome layer of 52 mg/m² thick and having the passivation current of 8 mA/cm², and the chrome hydrated oxide layer of 9 mg/m² thick in terms of metallic chrome wherein S/Cr is 0.03, was formed with the inner lacquer film and the outer lacquer film after baked at 200°C for 20 minutes.

Blanks cut from the tinfree steel were formed into the can body preform having the lapped portion of 0.4 mm wide, and then made into welded can bodies of 52 mm outer diameter and 136 mm high using the Soudronic type welding machine (model No. FBB 540), while a nitrogen gas is flowed through a passage immediately after the electrode rolls 12 and 13, under the conditions of the welding velocity of 55 m/min. the welding current frequency of 540 Hz, the welding current close to the lower limit of the ACR within the ACR, and the welding force of 45 daN (Kgf).

The inner wire electrode 14x having the marginal projection 14a of 0.04 mm high (refer to h in Fig. 1) and the outer wire electrode 14y whose surface to be brought into contact with the lapped portion 10 is flat and has no marginal projection were used.

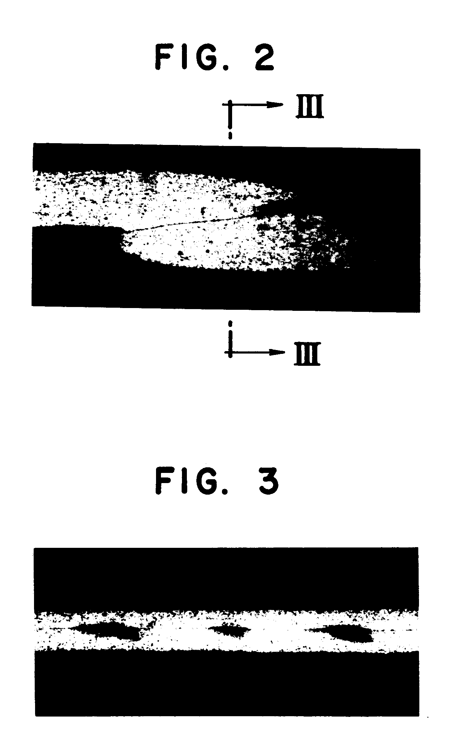

Metallographic photograghs of the weld portion of the welded can body thus made are shown in Fig. 2 where magnification is 62.5 and etching was made with a picral for two minutes, and in Fig. 3 where magnification is 31 and the etching condition is same as the above.

As illustrated in the photograghs, there are no needle-like splashes all along the weld portion, and no peeling was created at any portion along the weld portion by the tearing test which will be described hereinafter.

The enamel rater value which will be described hereinafter, of the inner surface of the weld portion which surface was coated with an epoxy-phenolic lacquer and baked so as to have a film thickness of about 16 μm

in average, was 0.5 mA.

Practical Examples:

Various tinfree steels indicated in Table 1 were made into welded can bodies under the same welding conditions as aforementioned except the welding currents. The test results of the welded cans are shown in Table 1, where the welded cans of sample Nos. 1 to 6 and sample Nos. 7 to 9 were prepared by cathodically electrolyzed in an electrolytic bath essentially consisting of $CrO_3$ of 50 gr./$\ell$, and NaF of 2.4 gr./$\ell$, and an electrolytic bath essentially consisting of CrO3 ef 50 gr./$\ell$, and $H_2SO_4$ of 0.5 gr./$\ell$, repectively.

Table 1

| sample No.*1 | metallic chrome layer (mg/m²) | chrome hydrated oxide layer (mg/m²) | S/C | passivation current (mA/cm²) | available current range(A) | enamel rater value (mA) | tearing*2 test | corrosion *3 resistance |
|---|---|---|---|---|---|---|---|---|
| 1 | 52 | 9 | 0.03 | 8 | 110 | 0.5 | ○ | ○ |
| 2 | 60 | 14 | 0.02 | 8 | 90 | 0.5 | ○ | ○ |
| 3 | 113 | 4 | 0.02 | 4 | 120 | 0.5 | ○ | ○ |
| 4 | 124 | 15 | 0.02 | 4 | 80 | 0.5 | ○ | ○ |
| 5 | 51 | 2 | 0.03 | 11 | 100 | 0.5 | ○ | △ |
| 6 | 156 | 8 | 0.02 | 2 | 0 | 6 | △ | ○ |
| 7 | 43 | 6 | 0.21 | 33 | 0 | 10 | △ | × |
| 8 | 104 | 5 | 0.18 | 5 | 0 | 9 | △ | ○ |
| 9 | 95 | 22 | 0.20 | 5 | 0 | 12 | △ | ○ |

Note: * 1 Sample Nos.1~4 and Nos.5~9 are welded can bodies according to the invention and of comparative examples, respectively.

* 2 In case of mark ○, tearing was possible with almost the same width all along the weld portion without peeling or rupture.
In case of mark △, rupture occurred during tearing owing to large splashes or pittings etc.

* 3 In case of mark ○, mark △ and mark ×, filform corosion is little, medium and large, respectively.

EP 0 412 735 B1

The methods of measurements of the properties and the test aforementioned will be described as follows;

(a) Measurement of S/Cr:

The strengths of the S·Kα line and the Cr·Kα line radiated from the surface of a sample placed in a vacuum chamber are counted by a fluoro-X ray method, and the amounts (mg/m²) of S and Cr are determined by using a correlation curve.

The same sample is removed from the chrome hydrated oxide layer by immersing in a boiled caustic sodium aquous solution of 7.5 mol for five minutes, and then the amounts (mg/m²) of S and Cr are determined in the same manner as the above.

The amounts of S and Cr in the chrome hydrated oxide layer are determined by subtracting the latter amounts from the former amounts, respectively.

The ratio of the mol number per 1 m² of S obtained by dividing the amount of S in the chrome hydrated oxide layer by the atomic weight of S, to the mol number per 1 m² of Cr obtained by dividing the amount of Cr in the chrome hydrated oxide layer by the atomic weight of Cr, is equal to S/Cr.

(b) Measurements of the passivation current:

A test piece as received is removed the chrome hydrated oxide layer in the same method as described in (a), and then sealed with a sealing tape except a circular measuring portion of 30 mm ø in area.

Thereafter, the test piece is anodically polarized at a polarization velocity of 250 mV/min. using a potentiometer in an aqeuous solution of $NaH_2PO_4$ of 1 mol and at the room temperature. The passivation anodic current i (A) at a point Q just prior to the passivation range P in the passivation curve as indicated in Fig. 4 is divided by the area of the measuring portion, that is, 3 cm × 3 cm × 0.785.

It is desirable to wet fully the surface of the measuring portion by immersing the test piece in the solution of the same composition as that of the measuring solution for five minutes before the polarization test.

(c) Measurement of the enamel rater value:

A test piece of about 20 mm wide carrying the weld portion which was formed with a mended lacquer film on the inside thereof, along the middle of the width thereof, is cut off the welded can body in the longitudinal direction.

The test piece is sealed fully with a wax or the like, except the inside area of 100 mm in the longitudinal direction including the step portion and its vicinity in the middle of the traverse direction.

The test piece is electrolyzed in an aqueous solution composed of 1 wt. % sodium chloride and 0.02 wt. % of a surface active agent in a beaker with a counter electrode of a stainless steel rod at a constant voltage of +6.3 volt (D.C. ) for four seconds, and the electrolyzing current in mA is determined. The current, that is, enamel rater value is proportional to the exposed metal area.

(d) The tearing test:

Notches are formed in the area of the original marginal portion adjacent to both sides of one of the end portions of the weld portion. The end portion inside the notches is gripped with a pair of pincers and pulled until the weld portion is teared off the welded can body starting from the notches.

The welded can body which is neither susceptible to peeling nor rupture due to large splashes or pittings and the like anywhere in the weld portion with this test, can be practically employed for preserved food or beverage cans, so far as the strength of the weld portion is concerned.

(e) The corrosion resistance:

A test piece formed with an epoxy-phenolic lacquer film on both sides is cross-cutted with a knife in parallel with, perpendicularly and in the directions of 45 degree with respect to the rolling direction, and then subjected to a Erichsen test until the bulging depth becomes 5 mm.

The test piece is sprayed with an aqueous sodium hydroxide solution of 5 wt% and at 38°C under the pressure of 1 daN/cm² (Kgf/cm²) for one hour, and then placed in a constant temperature and humidity chamber kept at 25°C and 85% of relative humidity. The development of filiform corrosions on the test piece in the chamber is observed.

## Claims

1. A mash-seam electric resistance welded can body consisting of tinfree steel formed before welding with a baked lacquer film (17, 18) thereon, the tinfree steel comprising a metallic chromium layer and a chromium hydrated oxide layer,

   wherein the metallic chromium layer is between 40 mg/m² and 130 mg/m², the chromium hydrated oxide layer is between 3 mg/m² and 20 mg/m² in terms of metallic chromium, an exposed iron area of the metallic chromium layer is 15 mA/cm² or less in terms of passivation current, and a ratio of the number of sulfur atoms to the number of chromium atoms in the chromium hydrated oxide layer is 0.05 or less.

## Patentansprüche

1.  Ein nach dem Quetschnahtverfahren elektrisch widerstandsgeschweißter Dosenkörper aus vor dem Schweißen mit einem darauf befindlichen Einbrennlackfilm (17, 18) versehenem zinkfreiem Stahl, wobei der zinnfreie Stahl eine metallische Chromschicht und eine chromhydrierte Oxidschicht umfaßt, wobei die metallische Chromschicht zwischen 40 mg/m² und 130 mg/m² ausmacht, der Anteil an metallischem Chrom in der chromhydrierten Oxidschicht zwischen 3 mg/m² und 20 mg/m² beträgt, eine freiliegende Eisenfläche der metallischen Chromschicht, was die Passivierstromdichte anbelangt, 15 mA/cm² oder weniger entspricht und ein Verhältnis der Anzahl von Schwefelatomen zu der Anzahl von Chromatomen in der chromhydrierten Oxidschicht 0,05 oder weniger ist.

## Revendications

1.  Corps de boîte métallique soudé par résistance à joint écrasé constitué d'acier sans étain formé avant soudage et revêtu d'une pellicule de laque cuite au four (17, 18), l'acier sans étain comprenant une couche de chrome métallique et une couche d'oxyde hydraté de chrome, dans lequel la couche de chrome métallique est entre 40 mg/m² et 130 mg/m², la couche d'oxyde hydraté de chrome est entre 3 mg/m² et 20 mg/m² du point de vue du chrome métallique, une surface de fer exposée de la couche de chrome métalique est 15 mA/cm² ou moins du point de vue du courant de passivation, et un rapport du nombre d'atomes de soufre au nombre d'atomes de chrome dans la couche d'oxyde hydraté de chrome est 0,05 ou moins.

# FIG. 1

# FIG. 4

FIG. 2

FIG. 3